# FASCICULE DE BREVET EUROPEEN

(11) **EP 4 224 024 B1**
(45) Date de publication et mention de la délivrance du brevet: **17.09.2025**
(21) Numéro de dépôt: 23168353.3
(22) Date de dépôt: 11.04.2020
(51) Int. Cl.: F16B 45/02

(54) **MOUSQUETON AVEC ORGANE DE DÉLIMITATION INTERNE**
KARABINERHAKEN MIT INTERNEM BEGRENZUNGSORGAN
CARABINER WITH INTERNAL DEFINING MEMBER

(30) Priorité: 19.04.2019 FR 1904249
(43) Date de publication de la demande: 09.08.2023
(62) Demande divisionnaire de: 20169227.4
(73) Titulaire: Zedel, 38920 Crolles (FR)
(72) Inventeur: EMONIN, Simon, 38100 GRENOBLE (FR)
(74) Mandataire: Talbot, Alexandre

(56) Documents cités:
- EP-A1- 3 073 132
- FR-A1- 2 694 203
- GB-A- 1 229 857
- JP-A- 2007 046 743
- US-S- D 467 156

## Description

### Domaine technique

L'invention est relative à un mousqueton utilisé dans le domaine de l'escalade et des travaux en hauteur.

### Technique antérieure

Les mousquetons sont couramment utilisés dans le domaine de l'escalade et des activités professionnelles nécessitant d'être encordé. On les utilise par exemple pour connecter un dispositif de sécurité au pontet d'un harnais d'encordement ou à une paroi.

Les mousquetons ont généralement une forme asymétrique, une zone du mousqueton étant spécialement adaptée pour coopérer avec un dispositif de sécurité, tandis qu'une autre zone est plus adaptée pour l'utilisation d'une corde par exemple.

Toutefois, au cours de l'utilisation, il n'est pas rare que le mousqueton tourne sur lui-même, par exemple lorsqu'un utilisateur assure un tiers escaladant une paroi. En effet, en cours d'assurage, le système d'assurage composé du mousqueton et du dispositif de sécurité bouge au fur et à mesure que l'utilisateur fait coulisser le dispositif de sécurité le long de la corde d'assurage. Dès lors, la position relative du dispositif de sécurité par rapport au mousqueton peut être modifiée, et nuire au bon fonctionnement du système d'assurage.

Pour remédier à ce problème, certains mousquetons sont dotés d'une barrette montée fixe au mousqueton pour séparer l'espace défini à l'intérieur du mousqueton en deux zones distinctes. Son rôle est d'empêcher le mouvement d'un dispositif - par exemple un dispositif de sécurité - au-delà de la zone définie par la barrette.

Certains mousquetons possèdent une barrette montée mobile en rotation par rapport au corps du mousqueton. La barrette est utilisée en tant que verrou pour empêcher l'ouverture non recherchée du doigt du mousqueton. Toutefois, ce type de dispositif présente l'inconvénient d'être volumineux, et de ne pas être pratique car il n'y a plus de séparation de l'espace défini à l'intérieur du mousqueton lorsque ce dernier est dans une position ouverte. La barrette étant montée pour former un verrou, les zones définies dans le mousqueton ne sont pas optimisées.

D'autres mousquetons munis d'une barrette sont connus. Certaines barrettes sont fixées au mousqueton par l'une de leurs extrémités, par exemple en introduisant au moins l'une des extrémités dans un trou réalisé dans le corps du mousqueton. Comme une ou plusieurs ouvertures ont été réalisées dans le mousqueton, ce dernier peut être fragilisé et il est nécessaire de prendre des précautions particulières pour mettre en œuvre son procédé de fabrication.

La barrette peut éventuellement être couplée à un ressort pour que cette dernière soit replacée dans une position prédéterminée après avoir été déplacée.

Lorsque la barrette n'est fixée au corps du mousqueton que par une seule de ses extrémités, la connexion d'un dispositif au mousqueton est facilitée, mais l'inconvénient est que ce dispositif peut aussi partir par inadvertance de la zone prédéfinie par la barrette.

Le fait de réaliser un trou dans le mousqueton pour loger l'extrémité de la barrette peut également être préjudiciable. Cela peut en effet conduire à sa fragilisation si cela n'est pas réalisé avec le degré de précision adéquat.

Il est également connu du document US 2016/0281766 de réaliser un mousqueton à barrette muni d'une barrette amovible qui vient définir deux espaces complémentaires dissociés à l'intérieur de la surface interne du mousqueton. La barrette est une pièce unique qui se fixe sur le corps du mousqueton en deux zones distinctes, par exemple par clippage.

Il ressort que dans certaines utilisations, cette configuration n'est pas pratique.

### Objet de l'invention

Un objet de l'invention consiste à prévoir un mousqueton configuré pour coopérer avec un dispositif de sécurité maintenu de manière permanente dans une zone prédéfinie du mousqueton et qui autorise une liberté de mouvement plus importante notamment le montage et/ou le démontage du dispositif de sécurité. Il est donc prévu un mousqueton selon la revendication 1. Selon un aspect, le mousqueton comporte :
- un corps,
- un doigt monté mobile en rotation à une première extrémité du corps entre une position fermée et une position ouverte du mousqueton, le doigt étant en contact avec une deuxième extrémité du corps lorsque le mousqueton est en position fermée,
- un organe de délimitation configuré pour former une première butée et une deuxième butée en saillie du corps, l'organe de délimitation étant monté démontable par rapport au corps, l'organe de délimitation étant fixé au corps par un premier élément de fixation et un deuxième élément de fixation,
- un organe de liaison reliant le premier élément de fixation au deuxième élément de fixation pour définir l'espacement entre la première butée et la deuxième butée.

Le mousqueton est remarquable en ce que l'organe de liaison est plaqué contre le corps. Le corps, le doigt et l'organe de liaison définissent un mousqueton avec un seul anneau central.

Préférentiellement, le premier élément de fixation et/ou le deuxième élément de fixation entourent complètement le corps.

Selon un développement de l'invention, l'organe de liaison est uniquement en contact d'une face externe du corps entre le premier élément de fixation et le deuxième élément de fixation.

De manière avantageuse, le deuxième élément de fixation est monté démontable par rapport au premier élément de fixation et par rapport à l'organe de liaison.

Préférentiellement, le premier élément de fixation est monolithique avec l'organe de liaison. Le deuxième élément de fixation définit un orifice traversant coopérant avec un deuxième orifice traversant défini dans l'organe de liaison, un élément de connexion passant à travers de l'orifice traversant et du deuxième orifice traversant pour former un organe de délimitation monobloc.

Dans un mode de réalisation particulier, l'organe de liaison est conformé pour reproduire la forme de la face externe du corps dans une partie courbée du corps, l'organe de liaison étant plaqué contre la partie courbée du corps.

Selon un développement, le premier élément de fixation, le deuxième élément de fixation et l'organe de liaison sont réalisés en matériau polymère.

Dans un mode de réalisation préférentiel, le premier élément de fixation et le deuxième élément de fixation définissent chacun un trou traversant coopérant avec des premier et deuxième éléments de connexion choisis parmi des vis, des rivets ou des goujons à sertir pour fermer les premier et deuxième éléments de fixation.

Avantageusement, les premier et/ou deuxième éléments de fixation sont munis d'un dispositif anti-rotation relativement au corps.

Il est avantageux de prévoir un mousqueton dans lequel les premier et/ou deuxième éléments de fixation comportent respectivement des premier et deuxième évidements ayant une forme complémentaire de celle du corps.

L'invention a également pour objet un système d'assurage qui comporte un mousqueton selon l'une des configurations précédentes et un assureur.

L'invention a encore pour objet un procédé de mise en place d'un dispositif de sécurité sur un mousqueton qui soit facile à mettre en œuvre.

Selon l'invention, ce but est atteint par un procédé selon la revendication 5. Selon un aspect, un procédé comporte successivement :
- Fournir un mousqueton, un dispositif de sécurité et un organe de délimitation, l'organe de délimitation possédant un premier élément de fixation, un deuxième élément de fixation et un organe de liaison, le premier ou le deuxième élément de fixation étant fixé au corps du mousqueton,
- Introduire le corps du mousqueton dans un trou de connexion du dispositif de sécurité jusqu'à atteindre une zone de travail,
- Fixer l'autre du premier ou deuxième élément de fixation sur le corps du mousqueton, le premier et le deuxième élément de fixation définissant des première et deuxième butées aux extrémités de la zone de travail, les premier et le deuxième éléments de fixation étant fixés ensemble par un organe de liaison plaqué sur le corps.

### Description sommaire des dessins

D'autres avantages et caractéristiques ressortiront plus clairement de la description qui va suivre de modes particuliers de réalisation et de mise en œuvre de l'invention donnés à titre d'exemples non limitatifs et représentés aux dessins annexés, dans lesquels :
la figure 1 illustre, de manière schématique, un mousqueton selon l'invention muni d'un organe de délimitation d'une zone de travail ;
la figure 2 représente de manière schématique différentes vues d'un premier élément de fixation associé à un organe de liaison ;
la figure 3 représente de manière schématique différentes vues d'un deuxième élément de fixation.

### Description des modes de réalisation

Les mousquetons utilisés dans le domaine de l'escalade servent à relier au moins deux dispositifs entre eux, pour assurer la sécurité d'un utilisateur. Ils peuvent par exemple servir à connecter le pontet d'un harnais d'encordement et un dispositif d'assurage.

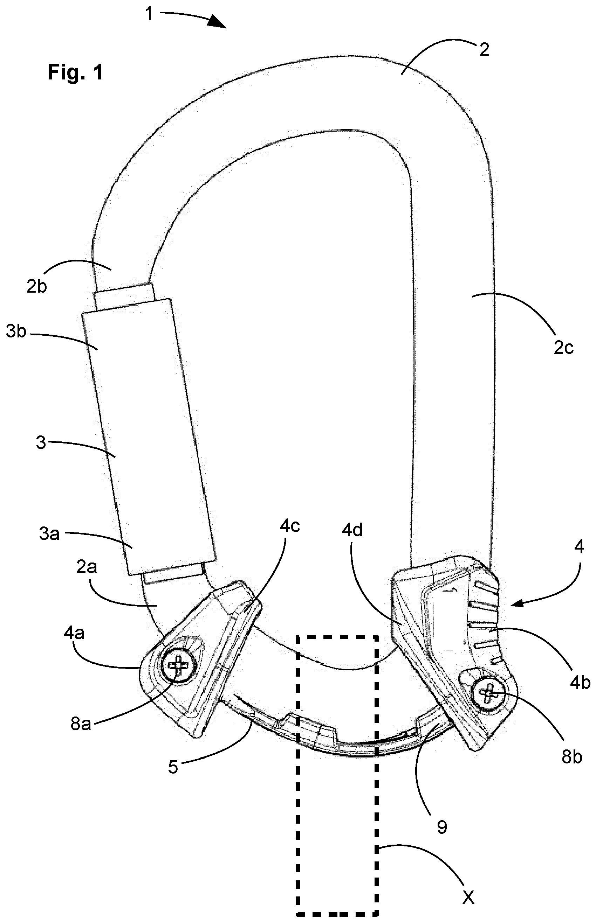

Un mousqueton 1, tel que celui représenté à la figure 1, comprend un corps 2 avantageusement métallique ayant une forme de C, et un doigt 3 monté mobile en rotation et destiné à fermer le mousqueton 1. Une première extrémité 3a du doigt 3 est montée mobile en rotation au niveau d'une première extrémité 2a du corps 2. Le doigt 3 est monté mobile en rotation au moyen d'un arbre dont l'axe longitudinal est orthogonal à un plan dit plan médian du mousqueton. Lors de son déplacement par rapport au corps 2, le doigt 3 se déplace dans le plan médian.

Une deuxième extrémité 3b du doigt 3 est en contact avec une deuxième extrémité 2b du corps 2 lorsque le mousqueton 1 est dans la position fermée. Le doigt 3 peut également adopter de multiples positions d'ouverture afin de permettre l'introduction d'un dispositif de sécurité X ou d'une corde par exemple. La position d'ouverture maximale correspond à celle où la deuxième extrémité 3b du doigt 3 peut toucher une partie centrale 2c du corps 2 ou correspond à la distance minimale entre l'extrémité 3b et la partie centrale 2c. Un ressort de rappel (non représenté) ramène le doigt 3 dans la position fermée du mousqueton 1, de sorte que sans l'application d'une force extérieure le mousqueton 1 est en position fermée.

De manière générale, la forme d'un mousqueton 1 telle que représentée dans le plan médian et sur la figure 1 est adaptée pour une utilisation donnée, et celle-ci ne présente généralement pas de plan de symétrie qui soit sécant au plan défini précédemment. Dès lors, la connexion entre un mousqueton 1 et un dispositif de sécurité X, par exemple un assureur doit être réalisée dans une zone spécifique du mousqueton 1 afin de l'utiliser dans des conditions de sécurité optimales. Par exemple, il est particulièrement avantageux de faire travailler le mousqueton selon son grand axe pour éviter de solliciter le doigt 3.

Afin de faire travailler le mousqueton selon son axe privilégié, il est connu de confiner le dispositif de sécurité dans une zone prédéfinie au moyen d'une barrette fixée sur le corps 2 du mousqueton 1. La barrette définit alors, avec le corps 2 et le doigt 3, deux espaces adjacents et distincts à l'intérieur de l'anneau définit par le corps 2 et le doigt 3. De cette manière, le dispositif de sécurité X est confiné dans un espace interne du mousqueton 1.

Il ressort que lorsque le dispositif de sécurité X est imposant, il ne rentre pas toujours dans l'espace de travail défini par la barrette et le corps 2 du mousqueton ce qui impose d'utiliser un autre mousqueton. Il arrive également que le dispositif de sécurité X ne définisse pas un trou de connexion ouvrable. Il faut alors installer le dispositif de sécurité X en ouvrant le doigt du mousqueton puis installer la barrette par la suite. Cette opération peut être fastidieuse lorsque la barrette est démontable et elle s'avère impossible autrement.

Selon l'invention il est donc prévu un mousqueton 1 muni d'un organe de délimitation 4 qui définit une zone dans laquelle le dispositif de sécurité X va pouvoir évoluer sur une partie du corps 2 sans que l'organe de délimitation 4 définisse une zone fermée qui oblige le démontage préalable de l'organe de délimitation 4 pour installer le dispositif de sécurité X. En d'autres termes, l'organe de délimitation ne définit pas un mousqueton à barrette.

L'organe de délimitation 4 est fixé au corps 2 au moyen d'un premier élément de fixation 4a et d'un deuxième élément de fixation 4b distinct du premier élément de fixation 4a. L'organe de délimitation 4 définit une première butée 4c et une deuxième butée 4d distincte de la première butée 4c. De manière avantageuse, le premier élément de fixation 4a forme la première butée 4c et le deuxième élément de fixation 4b forme la deuxième butée 4d.

Les première et deuxième butées 4c et 4d viennent en saillie du corps 2 pour définir les extrémités d'une zone de travail du dispositif de sécurité X le long du corps. En d'autres termes, en fonctionnement, le corps 2 passe au travers d'un trou de connexion du dispositif de sécurité X et les deux butées compliquent ou empêchent le déplacement du dispositif de sécurité X le long du corps 2 au-delà de la butée.

De manière avantageuse, au moins une butée possède une forme qui coopère avec la forme du trou de connexion pour autoriser l'insertion du dispositif de sécurité X dans la zone de travail et l'extraction hors de la zone de travail. La butée complique le passage du dispositif de sécurité X sans l'empêcher, par exemple en imposant une position angulaire prédéfinie pour l'insertion ou l'extraction hors de la zone de travail. Les deux butées font saillies du corps et sont dirigées vers l'intérieur du mousqueton. Les deux butées ont des sommets libres, c'est-à-dire sans connexion mécanique avec un autre élément du mousqueton.

Dans un mode de réalisation particulier, les deux butées ont une forme qui coopère avec la forme du trou de connexion pour autoriser l'insertion dans la zone de travail et son extraction. Il est alors possible d'installer et de retirer un dispositif de sécurité sans avoir à démonter l'organe de délimitation. Préférentiellement, une seule butée autorise l'extraction et l'insertion du dispositif de sécurité. La butée autorisant l'insertion et l'extraction peut être la butée la plus proche du doigt 3 ou la butée la plus éloignée du doigt.

L'organe de délimitation 4 n'empêche pas l'ouverture du doigt 3 et ne forme pas un verrou empêchant l'ouverture du doigt 3. L'organe de délimitation ne définissant pas de barrette à l'intérieur de l'anneau du mousqueton 1, tout dispositif de sécurité X ayant une largeur inférieure à la largeur de la zone de travail peut être monté, il n'est plus nécessaire de se préoccuper de la hauteur depuis le trou de connexion vis-à-vis de la hauteur de la barrette.

En fonctionnement, le dispositif de sécurité X va appuyer sur l'une ou l'autre des butées 4c et 4d ce qui incite la butée 4c/4d à se déplacer le long du corps 2. En se déplaçant, la butée 4c/4d va augmenter la zone de travail et va finir par autoriser un retournement du mousqueton 1 qui peut alors travailler hors de la configuration recherchée. Une des butées 4c/4d peut également venir bloquer totalement ou partiellement l'ouverture du doigt 3.

Pour éviter un déplacement des butées 4c/4d le long du corps 2, il est avantageux de fixer la première butée 4c avec la deuxième butée 4d. Il est particulièrement intéressant d'utiliser un organe de liaison 5 qui relie la première butée 4c à la deuxième butée 4d. L'organe de liaison 5 définit l'espacement entre la première butée 4c et la deuxième butée 4d, c'est-à-dire la zone de travail le long du corps 2. L'organe de liaison 5 recouvre une portion courbée du corps 2 pour ne pas définir de barrette. Avantageusement, l'organe de liaison 5 ne recouvre que la portion courbée du corps 2. Les deux butées définissent une zone de travail qui correspond à une portion courbée du corps 2.

Lorsque le dispositif de sécurité X appuie sur l'une des butées 4c et 4d, l'organe de liaison 5 fait que l'autre butée est également soumise à l'effort et s'oppose au mouvement. En formant un organe de délimitation 4 monobloc, les forces de frottement avec le corps 2 sont augmentées ce qui facilite le maintien en place des deux butées 4c et 4d.

Pour installer ou retirer le dispositif de sécurité X, il peut être nécessaire de le faire glisser entre la zone de travail et l'ouverture du mousqueton, c'est-à-dire l'espace entre le doigt 3 et le corps 2 lorsque le doigt 3 est ouvert. Pour autoriser le glissement du dispositif de sécurité X le long du mousqueton, il est important que le dispositif de sécurité X ne soit pas enfermé dans un anneau fermé dissocié du doigt comme cela est le cas dans les mousquetons à barrette de l'art antérieur.

L'organe de liaison 5 qui relie les première et deuxième butées 4c et 4d ne définit pas un anneau à l'intérieur de l'anneau formé par le corps 2. L'organe de liaison 5 ne s'oppose pas au déplacement du dispositif de sécurité X le long du corps 2.

Alors que dans les configurations de l'art antérieur, la barrette du mousqueton prend appuie sur deux points distincts du corps pour diviser la surface intérieure du mousqueton en deux surfaces complémentaires, selon l'invention, l'organe de liaison 5 n'intervient pas en tant que barrette et ne délimite pas deux espaces distincts dans l'espace intérieur du mousqueton.

Dans le mode de réalisation illustré à la figure 1, l'organe de liaison 5 est intégralement disposé hors de l'espace intérieur du mousqueton. L'organe de liaison 5 recouvre uniquement la face externe du corps 2 pour relier les deux butées 4c et 4d. Il est avantageux que l'organe de liaison 5 soit plaqué contre le corps 2.

Cette configuration est particulièrement avantageuse car le dispositif de sécurité X vient en appui sur le corps 2 du mousqueton comme dans une configuration standard. Le dispositif de sécurité X ne vient pas contraindre l'organe de liaison 5 contre le corps 2.

Dans une alternative de réalisation, l'organe de liaison 5 recouvre uniquement la face interne du corps 2 pour relier les deux butées. Il est avantageux que l'organe de liaison 5 soit plaqué contre le corps 2. Dans ce cas, l'utilisateur n'est pas incité à installer le dispositif de sécurité X ou tout autre élément entre le corps 2 et l'organe de liaison 5.

Lorsque l'organe de liaison 5 est disposé à l'intérieur de l'anneau défini par le corps 2, l'organe de liaison 5 peut définir une surface de travail qui possède une texturation différente de celle proposée par le corps 2. La surface de travail permet par exemple de réduire le glissement du dispositif de sécurité X. La surface de travail définie par l'organe de liaison 5 vient recouvrir la surface du corps 2 destinée à être en contact avec le dispositif de sécurité X.

Dans un autre mode de réalisation, l'organe de liaison 5 peut recouvrir en partie la face interne et en partie la face externe du corps 2 pour relier les deux butées.

Les premier et deuxième éléments de fixation 4a et 4b sont reliés par l'organe de liaison 5. Pour assurer un maintien accru de l'organe de délimitation 4 sur le corps 2, le premier élément de fixation 4a et le deuxième élément de fixation 4b sont configurés pour empêcher la rotation de l'organe de délimitation 4 par rapport au corps 2.

Pour une fixation optimale de l'organe de délimitation 4, il est avantageux de prévoir qu'au moins le premier élément de fixation 4a ou le deuxième élément de fixation 4b entoure complètement le corps 2, c'est-à-dire forment un anneau autour d'une section du corps 2.

Dans un mode de réalisation particulier, les deux éléments de fixation 4a et 4b forment chacun un anneau, la rotation de l'élément de délimitation 4 est impossible. La rotation est également impossible lorsque l'anneau n'est pas complet mais est suffisamment recouvrant pour empêcher un fonctionnement de type clipsage sur le corps. En entourant complètement le corps 2, l'organe de délimitation 4 est plus solide et sa durée de vie est améliorée.

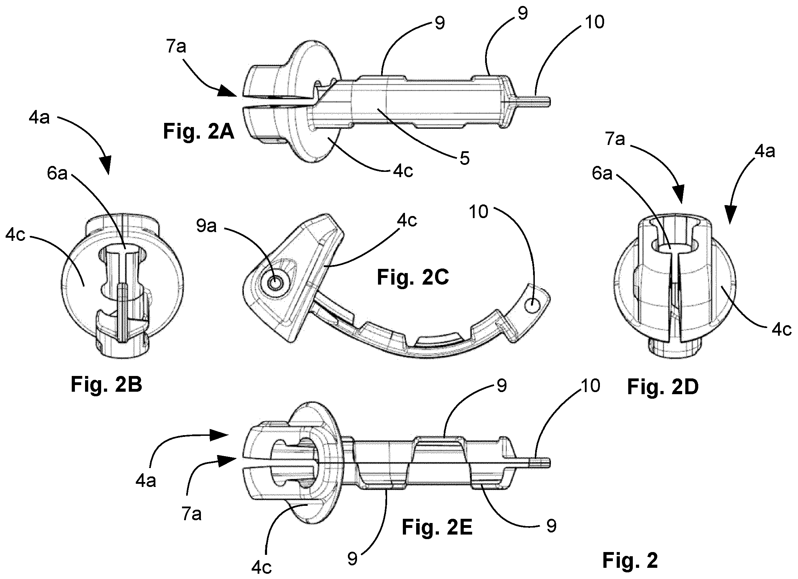

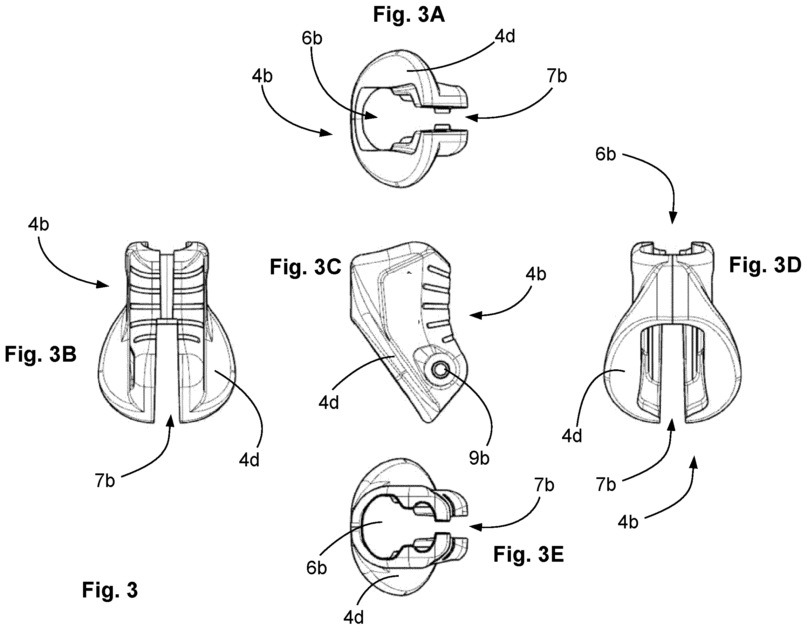

Il est particulièrement avantageux de prévoir que la section transversale du corps 2 ne soit pas circulaire et que le premier élément de fixation 4a et/ou le deuxième élément de fixation 4b définissent une forme qui coopère avec la section non circulaire pour former un dispositif anti-rotation de la première butée 4c et de la deuxième butée 4d par rapport au corps 2. Il est particulièrement avantageux de prévoir que le premier élément de fixation 4a et/ou le deuxième élément de fixation 4b définissent une forme complémentaire de la section du corps 2 pour empêcher la rotation. Les figures 2 et 3 illustrent schématiquement un mode de réalisation du premier élément de fixation définissant la première butée et du deuxième élément de fixation définissant la deuxième butée. Les figures 2B, 2D et 2E illustrent un premier élément de fixation qui définit une section interne de logement du corps 2 qui est non circulaire. Les figures 3A, 3D et 3E illustrent un deuxième élément de fixation qui définit une section interne de logement du corps 2 qui est non circulaire.

Dans une configuration avantageuse, le premier élément de fixation 4a et/ou le deuxième élément de fixation 4b sont réalisés par une coque ouvrable. La coque définit un anneau qui s'ouvre pour autoriser l'insertion du corps 2 dans la coque. De manière avantageuse, la coque définit deux demi-anneaux qui sont montés mobiles l'un par rapport à l'autre pour ouvrir la coque lors de l'insertion du corps 2 dans la coque ou lors de son extraction. Par demi-coque on entend avantageusement un élément qui représente la moitié de la coque ou sensiblement la moitié de la coque. Il est également possible qu'une demi-coque représente moins que la moitié de la coque et que l'autre demi-coque représente le complément.

Le premier élément de fixation 4a définit avantageusement un premier évidement 6a et une première entrée 7a apte à permettre l'introduction du corps 2 jusqu'à ce qu'il arrive dans le premier évidement 6a. De même, il est avantageux de prévoir que le deuxième élément de fixation 4b définit un deuxième évidement 6b et une deuxième entrée 7b permettant d'introduire le corps 2 dans le deuxième évidement 6b comme cela est illustré sur les différentes vues de la figures 2 et les différentes vues de la figure 3. Ces deux éléments de fixation sont chacun avantageusement configurés pour se clipser sur le corps 2 par déformation élastique. Avantageusement, les première et deuxième entrées 7a et 7b sont définies pas des fentes dans un anneau entourant complètement le corps 2. Ces deux fentes définissent deux plans qui sont préférentiellement coplanaires. Les fentes sont illustrées aux figures 2A, 2D et 2E ainsi qu'aux figures 3A, 3B, 3D et 3E.

De manière avantageuse, le premier et/ou le deuxième éléments de fixation 4a et 4b sont configurés pour se déformer plastiquement et ainsi autoriser l'introduction du corps 2 à travers la fente.

L'utilisation d'un premier et/ou d'un deuxième élément de fixation 4a, 4b munis d'une fente et déformables est particulièrement avantageuse car cela facilite la formation d'un organe de délimitation monobloc.

Si une fente est utilisée, il est particulièrement avantageux de placer cette fente en face de la partie externe du corps 2 du mousqueton, c'est-à-dire dans la partie extérieure de l'espace délimité par le corps 2. Il a été observé que le placement de la fente sur la partie interne du corps métallique 2 se traduit par une fragilisation accélérée des éléments de fixation car la fente subit de nombreux chocs avec le dispositif de sécurité X lors de son utilisation.

En position fermée, il est avantageux de prévoir que les deux côtés de la fente sont en contact pour une meilleure tenue mécanique.

Pour éviter toute ouverture intempestive du premier et/ou du deuxième éléments de fixation 4a/4b de l'organe de délimitation 4 sur le corps 2, chaque entrée 7a et 7b peut être maintenue fermée par au moins un élément de connexion 8a/8b (cf. figure 1). Cet élément de connexion peut par exemple être une pince enserrant les faces externes de la barrette 4 au voisinage des entrées 7a et 7b (mode de réalisation non représenté). Dans le mode de réalisation illustré une vis ferme les deux éléments de fixation 4a et 4b.

De manière avantageuse, des premier et/ou deuxième trous traversants 9a et 9b peuvent être réalisés au voisinage des première et deuxième entrées 7a et 7b, de sorte que des premier et/ou deuxième éléments de connexion 8a et 8b (cf. figure 1) tel que des vis, des rivets ou des goujons à sertir puissent coopérer avec les premier et deuxième trous traversants 9a et 9b et empêcher l'ouverture non intentionnelle des entrées 7a et 7b et maintenir fixement l'élément de délimitation 4 sur le corps 2. Dans un mode de réalisation particulier, les premier et deuxième éléments de connexion 8a et 8b s'étendent sur la totalité de la longueur des premier et deuxième trous traversants 9a et 9b. Les premier et deuxième trous traversants 9a et 9b peuvent également avoir des axes de révolution orthogonaux respectivement aux première et deuxième entrées 7a et 7b. Lorsque les entrées 7a et 7b sont coplanaires, les premier et deuxième trous traversant 9a et 9b peuvent être orthogonaux à ce plan.

La fermeture des première et deuxième entrées 7a et 7b permet de maintenir fixement l'élément de délimitation 4 sur le corps 2, et d'éviter tout déclipsage inattendu pouvant conduire à une mauvaise utilisation du dispositif de sécurité X connecté au mousqueton 1.

En variante de réalisation qui peut être combinée avec les modes de réalisation précédents, l'élément de fixation 4a/4b muni d'une entrée déformable par exemple une fente peut également est muni d'un système de clipsage avec une zone en saillie formée sur un premier côté de la fente et un trou formé dans le deuxième côté de la fente et coopérant avec la zone saillie pour assurer la fermeture de la fente par clipsage. Le système de clipsage peut être configuré pour former un point dur facilitant le maintien de la position fermée ou alors pour fermer de manière définitive l'organe de fixation.

Dans une variante de réalisation, le premier élément de fixation 4a ou le deuxième élément de fixation 4b est formé par un anneau dépourvu de moyen d'ouverture dudit anneau. Dans ce cas de figure, l'anneau n'est pas déformable et cet élément de fixation est monté en premier dans le mousqueton. L'autre élément de fixation est un élément ouvrable afin de réaliser l'introduction du corps 2.

Les premier et/ou deuxième éléments de fixation 4a, 4b peuvent comporter des moyens d'anti-rotation par rapport au corps 2. De cette manière, l'élément de fixation 4a/4b s'oppose intrinsèquement à la rotation de l'organe de délimitation 4 sans solliciter particulièrement l'organe de liaison, ni l'élément de fixation opposé.

L'utilisation d'un ou deux éléments de fixation munis de moyens d'anti-rotation permet de renforcer la tenue mécanique de l'organe de délimitation 4.

Dans un mode de réalisation avantageux, la forme des premier et/ou deuxième évidements 6a et 6b peut être complémentaire de celle du corps 2. Cela peut être particulièrement intéressant lorsque la section du corps 2 n'est pas circulaire, comme dans le mode de réalisation illustré sur les différentes vues des figures 2 et 3. Il convient également de noter que les éléments de fixation 4a et 4b ne prennent pas appui sur le doigt 3.

Dans une variante de réalisation, le moyen d'anti-rotation est configuré pour autoriser la rotation dans une plage angulaire sensiblement égale à 10° de manière à autoriser le montage de l'organe de délimitation sur un plus grand nombre de mousquetons.

Après avoir été positionné dans les premier et deuxième évidements 6a et 6b, le corps 2 est entouré par les premier et deuxième éléments de fixation 4a et 4b. Ces derniers présentent la propriété d'empêcher la rotation de l'organe de délimitation 4 par rapport au corps 2. Pour y parvenir, l'intérieur des premier et deuxième évidements 6a et 6b peut par exemple être recouvert d'un film antidérapant ou de rugosités destinées à empêcher les mouvements de l'organe de délimitation 4 relativement au corps 2.

Pour améliorer la tenue mécanique de l'élément de délimitation 4, il est particulièrement avantageux de prévoir que le premier élément de fixation 4a définisse une zone de contact qui coopère avec le corps 2 pour autoriser ou interdire le placement du premier élément de fixation 4a à certains endroits du corps 2 et sur le doigt 3. La forme du premier évidemment 6a et/ou la forme du deuxième évidement 6b sont avantageusement configurées pour autoriser l'installation du premier élément de fixation 4a et/ou du deuxième élément de fixation 4b uniquement dans une zone courbée du corps 2. Cette configuration permet d'éviter qu'un élément de fixation soit monté dans la zone rectiligne qui est une zone où il est difficile d'empêcher le déplacement le long du corps 2.

Selon l'invention, le corps 2 possède des portions avec des rayons de courbures variables. En définissant le rayon de courbure recherché dans les évidements, il est possible d'imposer la position du premier élément de fixation 4a et du deuxième élément de fixation 4b sur le corps 2 et de limiter son déplacement le long du corps 2.

Dans une alternative de réalisation, le corps 2 peut être pourvu d'une ou plusieurs zones en saillie qui vont bloquer le glissement du premier élément de fixation 4a ou du deuxième élément de fixation 4b le long du corps 2. Cependant, cette configuration n'est pas privilégiée car elle impose de modifier la forme de la surface du corps.

Comme illustré à la figure 1 et à la figure 2C, il est particulièrement avantageux de prévoir que l'organe de liaison 5 présente une forme qui reproduit la forme d'une partie courbée du corps 2. De cette manière, l'application d'une force sur un des éléments de fixation pour le déplacer se traduit par l'application d'une force sur l'autre élément de fixation ainsi que par l'application d'une force qui cherche à déformer l'organe de liaison 5. Cette configuration rend très difficile le déplacement de l'organe de délimitation 4 par le dispositif de sécurité X.

Dans le mode de réalisation illustré, l'organe de liaison 5 recouvre la face externe du corps 2 et définit des bordures 9 qui s'opposent au glissement de l'organe de liaison 5 autour du corps 2 ou transversalement par rapport au corps 2. Les bordures 9 évitent que l'organe de liaison 5 soit sollicité transversalement. Il peut en être de même lorsque l'organe de liaison ne recouvre que la face interne du corps 2.

Comme illustré à la figure 1, le corps 2 définit une forme générale de C dans le plan médian. Cependant, il est avantageux que le corps 2 possède une zone rectiligne faisant face au doigt 3 formant généralement la zone centrale 2c face au doigt 3. La zone rectiligne et le doigt 3 sont reliés par deux zones courbées. Il est particulièrement avantageux que le premier élément de fixation 4a soit configuré pour empêcher son glissement dans la zone rectiligne au moyen de l'évidement 6a. Il en est avantageusement de même pour le deuxième élément de fixation 4b.

Dans un mode de réalisation particulier, l'organe de délimitation 4 est monolithique, c'est-à-dire que le premier élément de fixation 4a, le deuxième élément de fixation 4b et l'organe de liaison 5 ne sont pas démontables les uns par rapport aux autres.

Cependant, pour faciliter le montage de l'organe de délimitation 4, il est avantageux de pouvoir séparer le premier élément de fixation 4a et le deuxième élément de fixation 4b. Dans le mode de réalisation illustré, le premier élément de fixation 4a et l'organe de liaison 5 sont réalisés de manière monolithique. Dans une alternative de réalisation, l'organe de liaison est configuré démontable par rapport au premier élément de fixation 4a et au deuxième élément de fixation 4b.

Il est particulièrement avantageux de réaliser l'organe de délimitation 4 en au moins deux parties mais préférentiellement en deux parties. Il est possible d'installer le premier élément de fixation 4a avec la première butée 4c ou le deuxième élément de fixation 4b avec la deuxième butée 4d sur le corps 2 du mousqueton. Le dispositif de sécurité X est ensuite installé dans la zone de travail du corps 2. Enfin, l'autre élément de fixation est installé et fixé à l'élément de fixation déjà monté. De cette manière, le dispositif de sécurité X est logé dans la zone de travail et un seul élément de fixation est monté après le dispositif de sécurité X.

Cette configuration est particulièrement avantageuse lorsque le dispositif de sécurité X définit un trou de connexion qui est plus petit que la première butée 4c et la deuxième butée 4d. Une fois installé dans la zone de travail, le dispositif de sécurité X ne peut plus quitter la zone de travail à cause des butées. Cette configuration permet de bloquer la position du dispositif de sécurité X dans une partie du mousqueton sans la présence d'une barrette. Dans les mousquetons à barrette, la barrette définit deux espaces distincts. Il existe un compromis à réaliser entre l'espace défini par la barrette pour y installer un équipement et les dimensions de la barrette pour supporter les efforts mécaniques sans empêcher l'actionnement du doigt 3. La configuration illustrée, permet de s'affranchir de la barrette. Le mousqueton définit un espace fonctionnel au moyen du corps 2 et du doigt 3, avantageusement, cet espace est unique. L'organe de délimitation forme un élément de blocage du dispositif de sécurité X dans la zone de travail sans pour autant former un mousqueton à barrette.

Pour que chaque élément de fixation 4a, 4b puisse être clipsé sans subir de déformation plastique pouvant entraîner sa fragilisation, il est avantageux de choisir un matériau ayant une valeur de déformation à la rupture adaptée, par exemple au moins 50%.

Le matériau formant l'élément de fixation 4a, 4b est avantageusement choisi parmi les matériaux thermoplastiques injectables et plus particulièrement en polyamide. Le clipsage de l'élément de fixation 4a, 4b peut ainsi être réalisé par déformation élastique des deux organes de fixation 4a et 4b, pour installer et désinstaller l'élément de délimitation sur le corps 2.

De manière avantageuse, lorsque l'organe de liaison peut être démonté du deuxième élément de fixation 4b, il est avantageux que l'organe de liaison possède un trou traversant 10 qui coopère avec le trou traversant 9. Ainsi, lors de la fermeture du deuxième élément de fixation 4b avec l'élément de connexion 8, l'élément de connexion 8 réalise également la connexion mécanique entre l'organe de liaison 5 et le deuxième élément de fixation 4b.

L'invention concerne également un système d'assurage comportant un dispositif de sécurité X par exemple un assureur et un mousqueton 1 possédant les caractéristiques qui viennent d'être décrites. L'invention peut par exemple être utilisée dans le cadre d'une utilisation professionnelle pour effectuer des descentes en rappel.

Pour que l'utilisateur mette en place correctement le dispositif de sécurité X sur le mousqueton 1, les étapes suivantes sont réalisées :
- fournir le dispositif de sécurité X et un mousqueton 1 selon l'une quelconque des configurations précédentes,
- introduire le corps 2 du mousqueton 1 à travers un trou de connexion du dispositif de sécurité X et faire glisser le dispositif de sécurité X le long du corps 2,
- faire passer une des butées à travers le trou de connexion du dispositif de sécurité X de sorte que le dispositif de sécurité X se trouve dans la zone de travail délimitée par les deux butées 4c et 4d.

Le dispositif de sécurité X est associé au mousqueton 1 après l'installation de l'organe de délimitation sur le corps 2 lorsque le dispositif de sécurité X définit un trou de connexion non ouvrable plus grand que l'une des butées.

Dans un autre mode de réalisation où le dispositif de sécurité X définit un trou de connexion non ouvrable plus petit que les deux butées, les étapes suivantes sont réalisées :
- fournir un mousqueton 1 selon l'une quelconque des configurations précédentes avec un seul des éléments de fixation installé sur le corps 2 du mousqueton 1,
- introduire le corps 2 du mousqueton 1 à travers un trou de connexion du dispositif de sécurité X et faire glisser le dispositif de sécurité X le long du corps 2 jusqu'à atteindre la zone de travail,
- fixer l'autre élément de fixation sur le corps 2, les premier et deuxième éléments de fixation étant reliés par l'organe de liaison 5. Le dispositif de sécurité X se trouve dans la zone de travail délimitée par les deux butées 4c et 4d.

Dans une dernière alternative de réalisation, les deux butées sont fixées au corps 2 après l'installation du dispositif de sécurité X dans le mousqueton.

Pour le retrait du dispositif de sécurité X hors du mousqueton 1, les étapes suivantes sont réalisées :
- fournir le dispositif de sécurité X et un mousqueton 1 selon l'une quelconque des configurations précédentes avec le dispositif de sécurité X installé dans la zone de travail,
- faire passer une des butées à travers le trou de connexion du dispositif de sécurité X de sorte que le dispositif de sécurité X quitte la zone de travail délimitée par les deux butées 4c et 4d.
- faire glisser le dispositif de sécurité X le long du corps 2 jusqu'à ce que le corps 2 du mousqueton 1 quitte le trou de connexion du dispositif de sécurité X.

Dans un autre mode de réalisation où le dispositif de sécurité X définit un trou de connexion non ouvrable plus petit que les deux butées, les étapes suivantes sont réalisées :
- fournir le dispositif de sécurité X et un mousqueton 1 selon l'une quelconque des configurations précédentes avec le dispositif de sécurité X installé dans la zone de travail,
- démonter un des éléments de fixation définissant une des butées et faire sortir le dispositif de sécurité X hors de la zone de travail.
- faire glisser le dispositif de sécurité X le long du corps 2 jusqu'à ce que le corps 2 du mousqueton 1 quitte le trou de connexion du dispositif de sécurité X.

Dans une dernière alternative de réalisation, les deux éléments de fixation sont démontés avant d'extraire le dispositif de sécurité X hors du mousqueton.

Ces différentes étapes peuvent être également réalisées pour la mise en place d'un dispositif de sécurité X tel qu'un assureur, une longe, une poulie ou un bloqueur.

## Revendications

1. Mousqueton (1) comprenant :
- un corps (2) possédant une section transversale non-circulaire et des portions avec des rayons de courbures variables,
- un doigt (3) monté mobile en rotation à une première extrémité (2a) du corps (2) entre une position fermée et une position ouverte du mousqueton (1), le doigt (3) étant en contact avec une deuxième extrémité (2b) du corps (2) lorsque le mousqueton (1) est en position fermée,
- un organe de délimitation (4) configuré pour former une première butée (4c) et une deuxième butée (4d) en saillie du corps (2), l'organe de délimitation (4) étant monté démontable par rapport au corps (2), l'organe de délimitation (4) étant fixé au corps (2) par un premier élément de fixation (4a) et un deuxième élément de fixation (4b),
dans lequel le premier élément de fixation (4a) et le deuxième élément de fixation (4b) définissent chacun un évidement pour entourer complètement le corps (2),
dans lequel les évidements du premier élément de fixation (4a) et du deuxième élément de fixation (4b) définissent chacun une forme qui coopère avec la section non circulaire du corps (2) pour former un dispositif anti-rotation de la première butée (4c) et de la deuxième butée (4d) par rapport au corps (2), **caractérisé en ce que** l'organe de délimitation (4) définit une zone d'évolution pour un dispositif de sécurité (X) sans définir une zone fermée ;
dans lequel les évidements du premier élément de fixation (4a) et du deuxième élément de fixation (4b) définissent chacun un rayon de courbure de la zone à rayons de courbures variables imposant une position du premier élément de fixation (4a) et du deuxième élément de fixation (4b) sur le corps (2) et limitant un déplacement le long du corps (2).

2. Mousqueton (1) selon la revendication 1, dans lequel le premier élément de fixation (4a) et le deuxième élément de fixation (4b) définissent chacun un trou traversant (9a, 9b), des premier et deuxième éléments de connexion (8a, 8b) choisis parmi des vis, des rivets ou des goujons à sertir étant insérés dans les trous traversants (9a,9b) pour fermer les premier et deuxième éléments de fixation (4a, 4b).

3. Mousqueton (1) selon l'une des revendications 1 et 2, dans lequel les premier et/ou deuxième éléments de fixation (4a, 4b) comportent respectivement des premier et deuxième évidements (6a, 6b) ayant une forme complémentaire de celle du corps (2).

4. Système d'assurage comportant un mousqueton (1) selon l'une quelconque des revendications 1 à 3 et dispositif de sécurité (X) choisi par exemple parmi un assureur, un bloqueur, une longe ou une poulie.

5. Procédé de mise en place d'un dispositif de sécurité (X) sur un mousqueton (1), comportant les étapes suivantes :
- fournir un mousqueton (1) selon l'une quelconque des revendications 1 à 3, un dispositif de sécurité (X) et un organe de délimitation (4), dans lequel le corps (2) possède une section transversale non-circulaire et des portions avec des rayons de courbures différents, dans lequel l'organe de délimitation (4) possédant un premier élément de fixation (4a), un deuxième élément de fixation (4b) qui définissent chacun un évidement pour entourer complètement le corps (2), le premier ou le deuxième élément de fixation (4a, 4b) étant fixé au corps (2) du mousqueton (1) pour former l'un d'une première butée (4c) ou d'une deuxième butée (4d) en saillie du corps (2), dans lequel le premier élément de fixation (4a) et le deuxième élément de fixation (4b) définissent chacun une forme qui coopère avec la section non circulaire du corps (2) pour former un dispositif anti-rotation de la première butée (4c) et de la deuxième butée (4d) par rapport au corps (2), l'organe de délimitation (4) étant monté démontable par rapport au corps (2),
- introduire le corps (2) du mousqueton (1) dans un trou de connexion du dispositif de sécurité (X) jusqu'à atteindre une zone de travail,
- fixer l'autre du premier ou deuxième élément de fixation (4a, 4b) sur le corps (2) du mousqueton (1), le premier et le deuxième élément de fixation (4a, 4b) définissant des première et deuxième butées (4c, 4d) aux extrémités de la zone de travail, les premier et le deuxième éléments de fixation (4a, 4b) étant fixés au corps (2) et dans lequel les évidements du premier élément de fixation (4a) et du deuxième élément de fixation (4b) définissent chacun un rayon de courbure imposant une position du premier élément de fixation (4a) et du deuxième élément de fixation (4b) sur le corps (2) et limitant un déplacement le long du corps (2).

## Patentansprüche

1. Karabinerhaken (1), umfassend:
- einen Körper (2), der einen nicht kreisförmigen Querschnitt und Abschnitte mit variablen Krümmungsradien aufweist,
- einen Finger (3), der an einem ersten Ende (2a) des Körpers (2) zwischen einer geschlossenen Position und einer geöffneten Position des Karabinerhakens (1) drehbeweglich angebracht ist, wobei der Finger (3) mit einem zweiten Ende (2b) des Körpers (2) in Kontakt ist, wenn der Karabinerhaken (1) in der geschlossenen Position ist,
- ein Begrenzungsorgan (4), das dazu konfiguriert ist, einen ersten Anschlag (4c) und einen zweiten Anschlag (4d) zu bilden, die vom Körper (2) vorspringen, wobei das Begrenzungsorgan (4) in Bezug auf den Körper (2) abnehmbar montiert ist, wobei das Begrenzungsorgan (4) durch ein erstes Befestigungselement (4a) und ein zweites Befestigungselement (4b) am Körper (2) befestigt ist,
wobei das erste Befestigungselement (4a) und das zweite Befestigungselement (4b) jeweils eine Aussparung definieren, um den Körper (2) vollständig zu umschließen,
wobei die Aussparungen des ersten Befestigungselements (4a) und des zweiten Befestigungselements (4b) jeweils eine Form definieren, die mit dem nicht kreisförmigen Querschnitt des Körpers (2) zusammenwirkt, um eine Verdrehsicherung des ersten Anschlags (4c) und des zweiten Anschlags (4d) in Bezug auf den Körper (2) zu bilden,
**dadurch gekennzeichnet, dass** das Begrenzungsorgan (4) einen Bewegungsbereich für eine Sicherheitsvorrichtung (X) definiert, ohne einen geschlossenen Bereich zu definieren;
wobei die Aussparungen des ersten Befestigungselements (4a) und des zweiten Befestigungselements (4b) jeweils einen Krümmungsradius des Bereichs mit variablen Krümmungsradien definieren, der eine Position des ersten Befestigungselements (4a) und des zweiten Befestigungselements (4b) auf dem Körper (2) vorgibt und eine Bewegung entlang des Körpers (2) begrenzt.

2. Karabinerhaken (1) nach Anspruch 1, wobei das erste Befestigungselement (4a) und das zweite Befestigungselement (4b) jeweils ein Durchgangsloch (9a, 9b) definieren, wobei erste und zweite Verbindungselemente (8a, 8b), die aus Schrauben, Nieten oder Blindnieten ausgewählt sind, in die Durchgangslöcher (9a, 9b) eingesetzt sind, um das erste und das zweite Befestigungselement (4a, 4b) zu schließen.

3. Karabinerhaken (1) nach einem der Ansprüche 1 und 2, wobei das erste und/oder das zweite Befestigungselement (4a, 4b) jeweils eine erste und eine zweite Aussparung (6a, 6b) mit einer Form aufweist, die komplementär zu der des Körpers (2) ist.

4. Sicherungssystem, umfassend einen Karabinerhaken (1) nach einem der Ansprüche 1 bis 3 und eine Sicherheitsvorrichtung (X), die zum Beispiel aus einem Sicherungsgerät, einem Stopper, einer Leine oder einer Rolle gewählt ist.

5. Verfahren zum Installieren einer Sicherungsvorrichtung (X) an einen Karabinerhaken (1), umfassend die folgenden Schritte:
- Bereitstellen eines Karabinerhakens (1) nach einem der Ansprüche 1 bis 3, einer Sicherheitsvorrichtung (X) und eines Begrenzungsorgans (4), wobei der Körper (2) einen nicht kreisförmigen Querschnitt und Abschnitte mit unterschiedlichen Krümmungsradien aufweist, wobei das Begrenzungsorgan (4) ein erstes Befestigungselement (4a) und ein zweites Befestigungselement (4b) aufweist, die jeweils eine Aussparung definieren, um den Körper (2) vollständig zu umschließen, wobei das erste oder das zweite Befestigungselement (4a, 4b) am Körper (2) des Karabinerhakens (1) befestigt sind, um eines von einem ersten Anschlag (4c) oder einem zweiten Anschlag (4d) zu bilden, der vom Körper (2) vorspringt, wobei das erste Befestigungselement (4a) und das zweite Befestigungselement (4b) jeweils eine Form definieren, die mit dem nicht kreisförmigen Querschnitt des Körpers (2) zusammenwirkt, um eine Verdrehsicherung des ersten Anschlags (4c) und des zweiten Anschlags (4d) in Bezug auf den Körper (2) zu bilden, wobei das Begrenzungsorgan (4) in Bezug auf den Körper (2) abnehmbar montiert ist,
- Einführen des Körpers (2) des Karabinerhakens (1) in ein Verbindungsloch der Sicherheitsvorrichtung (X), bis ein Arbeitsbereich erreicht ist,
- Befestigen des anderen vom ersten oder zweiten Befestigungselement (4a, 4b) am Körper (2) des Karabinerhakens (1), wobei das erste und das zweite Befestigungselement (4a, 4b) an den Enden des Arbeitsbereichs einen ersten und einen zweiten Anschlag (4c, 4d) definieren, wobei das erste und das zweite Befestigungselement (4a, 4b) am Körper (2) befestigt sind und wobei die Aussparungen des ersten Befestigungselements (4a) und des zweiten Befestigungselements (4b) jeweils einen Krümmungsradius definieren, der eine Position des ersten Befestigungselements (4a) und des zweiten Befestigungselements (4b) auf dem Körper (2) vorgibt und eine Bewegung entlang des Körpers (2) begrenzt.

## Claims

1. Carabiner (1) comprising :
- a body (2) having a non-circular cross-section and portions with variable radii of curvature,
- a gate (3) rotatably mounted at a first end (2a) of the body (2) between a closed position and an open position of the karabiner (1), the gate (3) being in contact with a second end (2b) of the body (2) when the carabiner (1) is in the closed position,
- a delimiting member (4) configured to form a first abutment (4c) and a second abutment (4d) projecting from the body (2), the delimiting member (4) being removably mounted with respect to the body (2), the delimiting member (4) being secured to the body (2) by a first fastening element (4a) and a second fastening element (4b),
wherein the first fastening element (4a) and the second fastening element (4b) each define a recess for completely surrounding the body (2),
wherein the recesses of the first fastening element (4a) and the second fastening element (4b) each define a shape which co-operates with the non-circular cross-section of the body (2) to form an anti-rotation device for the first abutment (4c) and the second abutment (4d) relative to the body (2),
**characterized in that** the delimiting member (4) defines an evolution zone for a safety device (X) without defining a closed zone;
wherein the recesses of the first fastening element (4a) and of the second fastening element (4b) each define a radius of curvature of the zone with variable radii of curvature imposing a position of the first fastening element (4a) and of the second fastening element (4b) on the body (2) and limiting a displacement along the body (2).

2. Carabiner (1) according to claim 1, wherein the first fastening element (4a) and the second fastening element (4b) each define a through hole (9a, 9b), first and second connecting elements (8a, 8b) selected from screws, rivets or crimping studs being inserted into the through holes (9a, 9b) to close the first and second fastening elements (4a, 4b).

3. Carabiner (1) according to one of claims 1 and 2, wherein the first and/or second fastening elements (4a, 4b) respectively comprise first and second recesses (6a, 6b) having a shape complementary to that of the body (2).

4. A belay system comprising a karabiner (1) according to any one of claims 1 to 3 and a safety device (X) chosen, for example, from a belay device, a blocker, a lanyard or a pulley.

5. A method of fitting a safety device (X) to a carabiner (1), comprising the following steps:
- providing a carabiner (1) according to any one of claims 1 to 3, a safety device (X) and a delimiting member (4), wherein the body (2) has a non-circular cross-section and portions with different radii of curvature, wherein the delimiting member (4) having a first fastening element (4a), a second fastening element (4b) which each define a recess to completely surround the body (2), the first or second fastening element (4a, 4b) being secured to the body (2) of the carabiner (1) to form one of a first abutment (4c) or a second abutment (4d) projecting from the body (2), wherein the first fastening element (4a) and the second fastening element (4b) each define a shape which cooperates with the non-circular cross-section of the body (2) to form an anti-rotation device for the first abutment (4c) and the second abutment (4d) relative to the body (2), the delimiting member (4) being removably mounted relative to the body (2),
- insert the body (2) of the carabiner (1) into a connection hole of the safety device (X) until reaching a working area,
- securing the other of the first or second fastening elements (4a, 4b) to the body (2) of the carabiner (1), the first and second fastening elements (4a, 4b) defining first and second abutments (4c, 4d) at the ends of the working area, the first and second fastening elements (4a, 4b) being fixed to the body (2) and wherein the recesses of the first fastening element (4a) and the second fastening element (4b) each define a radius of curvature imposing a position of the first fastening element (4a) and the second fastening element (4b) on the body (2) and limiting displacement along the body (2).
